# EUROPEAN PATENT SPECIFICATION

(11) **EP 4 251 363 B1**
(45) Date of publication and mention of the grant of the patent: **05.08.2026**
(21) Application number: 21823224.7
(22) Date of filing: 26.11.2021
(51) Int. Cl.: B23K 26/00, B23K 26/082, B23K 26/352, B23K 26/362, B23K 26/402, B23K 26/70, B23K 37/006, C03C 23/00, C03C 17/36, B23K 101/18, B23K 103/16, B23K 103/00

(54) **LASER APPARATUS FOR MOUNTING ON A WINDOW MOUNTED IN SITU COMPRISING A SKIRT AND ASSOCIATED METHOD, AND USE OF A SKIRT**
AUF EINEM VOR ORT MONTIERTEN FENSTER ZU MONTIERENDE LASERVORRICHTUNG MIT EINER SCHÜRZE SOWIE ZUGEHÖRIGES VERFAHREN UND VERWENDUNG EINER SCHÜRZE
APPAREIL LASER POUR ÊTRE MONTÉ SUR UNE FENÊTRE MONTÉE IN SITU COMPRENANT UNE JUPE ET MÉTHODE ASSOCIÉE, ET UTILISATION D'UNE JUPE

(30) Priority: 30.11.2020 EP 20210718
(43) Date of publication of application: 04.10.2023
(73) Proprietor: AGC Glass Europe, 1348 Louvain-La-Neuve (BE); AGC Inc., Tokyo 100-8405 (JP); AGC Flat Glass North America, Inc., Alpharetta, 30022-1167 (US); AGC Vidros do Brasil Ltda., CEP 12523-671 Guaratinguetá, São Paulo (BR)
(72) Inventor: MORGANTE, Eric, 6041 Gosselies (BE)
(74) Representative: AGC Glass Europe
(86) International application number: PCT/EP2021/083239
(87) International publication number: WO 2022/112529

(56) References cited:
- DE-A1- 10 059 246
- US-A1- 2015 190 886
- US-A1- 2018 036 839
- US-A1- 2019 001 594

## Description

### Field

The present invention relates to a laser apparatus to treat a surface of a window, see claim 1.

The present intention also relates to a method to treat a surface of a window, preferably a multi-glazed window, with such laser apparatus, see claim 10.

The present invention further relates to the use of a skirt to block a majority of reflections of the laser see claim 11.

The window is mounted in situ meaning mounted on a stationary object, for instance a building, or mounted on a mobile object, for instance a vehicle, a train.

Thus, the invention concerns multiple domains where a surface of a window, preferably multi-glazed window, mounted in situ is treated by a laser and preferably where a multi-glazed windows including at least one coating system are used and wherein removing part of said coating system is required to improve the electromagnetic transparency.

### Background Art

Usually, when a window is mounted in situ meaning that the window is mounted on a stationary object, for instance a building, or mounted on a mobile object, for instance a vehicle, a train to close an opening in the stationary or the mobile object, windows are removed from the opening to treat their surfaces.

A treatment can be a laser scribing or like, or preferably a decoating of a coating system.

A standard single-layered window has poor thermal performances. This is why most windows are now built using two or more glass panels separated by a gas and/or polymer-based interlayer. This kind of windows are is called a multi-glazed window.

A coating system is typically applied on the interface of one or several glass panels of a multi-glazed window in order to further improve the multi-glazed window properties.

This coating system can either improve the multi-glazed window insulation, reduce the amount of infrared and/or ultraviolet radiation entering the multi-glazed window and/or keep the sun's heat out of a space wherein such multi-glazed window insulation is used.

However, this type of coating systems is generally metal-based and therefore acts as a Faraday cage, preventing electromagnetic waves such as radio waves, from entering or leaving the space.

In order to improve the transmittance of a multi-glazed window containing a coating system, one can use a laser decoating system to remove at least one portion of the coating system. The total surface to be decoated is typically between 1 and 3% of the total coating system surface, in order to both improve the transmission of radio waves through the multi-glazed-window without impairing the properties of said coating system.

Preferably, to improve the transmission of a radio wave through the window, the decoating system will remove segments from the coating system and the sum of the longest sub-segment of each segment is equal to nλ/2 wherein n is a positive integer greater than zero and lambda (λ) is the wavelength of the radio wave. It is necessary to have a wide band frequency selective surface in order to ensure the transmission of waves of different frequencies through the multi-glazed window, typically between 2GHz and 100Ghz. For instance, the decoating system can be configured to remove a segment of a length greater than 400 mm and a width between 10 and 100 µm.

Preferably, for some applications such as toll communication systems, 4G and/or 5G receptors and transmitters, a small decoating portion is desired instead of a large decoating portion. For instance, a small decoating portion has typically a length less than 400 mm.

A simple approach to solve this problem of RF energy reflection is to remove a portion of the coating system. This approach, however, reduces the solar control benefits offered by the multi-glazed window. Moreover, for multi-glazed window located inside the building, the vehicle or the car, the decoated region would be unacceptably large. On top of that, the transition between the decoated portion and the coating itself is eye-visible and usually non-accepted by users.

Another solution has been to cut lines in the coating system to create a surface which is frequency selective: it has relatively high reflectivity/absorbance for solar energy but relatively low reflectivity/absorbance in the RF region of the electromagnetic spectrum. The cutting may be performed by laser ablation and the spacing of the slits is chosen to provide selectivity at the desired frequency.

To improve the transmittance of said multi-glazed window, WO 2015/050762 describes an apparatus comprising a laser light source and a lens array configured to focus said laser light source on a coating system of a multi-glazed window. Said apparatus is mounted on suction pads to secure said apparatus on said multi-glazed window. Said apparatus also comprises at least two motors configured to move said laser along rails along the X and Y axis. Said laser is capable of scribing a grid shape on said coating system to improve the electromagnetic transmission of said multi-glazed window.

However, said laser is always focused on a single point and cannot be adapted. In fact, this apparatus is only built to have a focal point in a specific surface and thus such apparatus are built for a single type of double-glazed window being two glass panels separated by a spacer creating a space filled with gas, where the coating system is positioned on the internal interface of the window. Hence, it is not possible to use this apparatus to other types of windows where the glass thickness is different or where the coating system is applied on a different interface.

On top of that, such system needs to move the whole laser device. This movement is complicated, dangerous and implies heavy elements such as motors.

In another domain, US6,559,411 describes an apparatus for laser scribing a tin oxide layer coated on a glass panel substrate.

A predetermined scribing is formed on the tin oxide layer by focusing a laser on said tin oxide layer and by displacing said glass panel substrate by a conveyor along the X or Y axis. Moreover, the position of the laser is adjusted in the Z direction during the laser scribing to maintain the focusing on said tin oxide layer.

However, this focusing requires a precise and complete understanding of the glass panel substrate including the thickness of each layer and the position of said tin oxide layer as well as the knowledge of the exact distance between the conveyor and the laser.

Laser beam of prior art is always placed and fixed orthogonally to the surface to be decoated. To create a decoated surface the decoating apparatus must be displace along said surface using motors and complex drive systems.

Laser beam of the prior art can be reflected on a surface and then can destroy object near the laser device of the prior art.

Moreover, systems described in prior art are heavy to mount on a multi-glazed window due to displacement elements (rails,...) and motors. The precision and the quality are hence not appropriate for small decoating portions due to movements of the apparatus. The decoating time is also long due to displacements of the laser light source especially for small decoating portion where many small displacements are needed within a short distance.

Thus, this apparatus can only be used in factories on glass panel that have just been manufactured. Hence, this apparatus cannot be used on a multi-glazed window of unknown structure, such as the number of glass panels, the number of lamination layers, the numbers of spacers, the number, nature and position of the coating system, ... and that is already mounted on an object, for instance a building or a vehicle.

In addition, a large number of windows are already installed and are known to prevent the transmission of electromagnetic wave. Such windows cannot be replaced or be replaced without important costs . The multi-glazed windows cannot be retrieved from the object, sent back to a factory to remove the part of the coating and then, sent back to be assembled again on the object. Such situations require the decoating process to be carried out in situ, when the multi-glazed window is mounted on the object. In most cases, the structure of these multi-glazed windows and the exact position of their coating system is completely unknown. It is therefore impossible for such apparatus to focus the laser properly on the coating system.

On top of that, when apparatus of the prior art are mounted on a multi-glazed window, the tolerances of manufacture, the variability of mounting system occurs a variability of the distance between the coated surface and the decoating apparatus. Such variability implies that the focal point of the laser beam is not focused on the coated surface. The decoating of such apparatus of the prior art is not efficient, the laser beam being not focused at the right position. position.

US 2018/036839 A1, describing the preamble of claim 1, shows according to its abstract, a method of ablation using a mechanically scanned laser.

Apparatus of the prior art are designed to be used in factory reflections of rays are not an issue.

Hence, the ongoing technical issue is to obtain a decoating apparatus and process that can be used on multiple kind of multi-glazed windows, wherein the position and the thickness of the glass panels and the position of the at least one coating system are not known; and that are able to work when said multi-glazed window is already mounted on an object.

### Summary of invention

The present invention relates, in a first aspect, to a laser apparatus defined in claim 1, the apparatus being inscribed in a parallelepiped rectangle R defined by a longitudinal axis, X, a vertical axis, Y defining a plane P and a lateral axis, Z, comprising a mounting means to mount the laser apparatus on a window, preferably a multi-glazed window, mounted in situ. The laser apparatus also comprises a laser device generating a laser beam to treat a surface of the window, an orientation means able to orientate the laser beam defining a maximum decoatable surface (WSm) on the surface to be treated and a housing comprising an aperture to let the laser beam going out of the housing.

The solution as defined in the first aspect of the present invention is based on the laser apparatus comprises a skirt at least partially surrounding the aperture and in that the skirt is opaque to the laser beam. Preferably, the frequency of the laser beam equals to or is higher than substantially 20kHz.

The present invention relates, in a second aspect, to a method of treating a surface of a window mounted in situ with a laser apparatus according to the first aspect (see claim 10), mounted on the window; the method comprises a step of treating a working area of a surface with the laser beam.

The solution as defined in the second aspect of the present invention is based on a majority of reflections of the laser beam are blocked by the skirt during the treating step.

Finally, in a third aspect, the present invention relates to the use of a skirt (see claim 11), around an aperture of a laser apparatus comprising a mounting means to mount the laser apparatus on a window mounted in situ to block a majority of reflections of the laser beam; the laser apparatus comprises a laser device generating a laser beam to treat a surface of the window and an orientation means able to orientate the laser beam defining a maximum decoatable surface (WSm) on the surface to be treated.

The following description relates to building applications but it's understood that the invention may be applicable to others fields like automotive or transportation applications.

### Brief description of the drawings

This and other aspects of the present invention will now be described in more detail, with reference to the appended drawings showing various exemplifying embodiments of the invention which are provided by way of illustration and not of limitation. The drawings are a schematic representation and not true to scale. The drawings do not restrict the invention in any way. More advantages will be explained with examples.
FIG. 1 is a schematic view of a laser apparatus, especially a decoating apparatus, mounted on a multi-glazed window according to the present invention.
FIG. 2 is a sectional 3D view of a laser apparatus, especially a decoating apparatus, according to the present invention mounted on a multi-glazed window.
FIG. 3 is a sectional 3D view of a laser apparatus, especially a decoating apparatus, wherein the skirt is hidden according to the present invention mounted on a multi-glazed window.
FIG. 4 is a sectional 3D view from the bottom of a laser apparatus, especially a decoating apparatus, according to the present invention mounted on a multi-glazed window.
FIG. 5 is a schematic view from the multi-glazed window of a laser apparatus, especially a decoating apparatus, according to the present invention.

### Detailed description

It is an object of the present invention to alleviate the above described problems and to reduce the propagation of the reflected rays of the laser beam around the laser apparatus.

In the following description, unless otherwise specified, expression "substantially" mean to within 10%, preferably to within 5%.

The following description relates to a decoating apparatus but it's understood that the invention may be applicable to any laser apparatus to treat a surface of a window mounted in situ. Preferably the laser apparatus is a decoating apparatus to decoat at least partially a coating system present on a surface of a window.

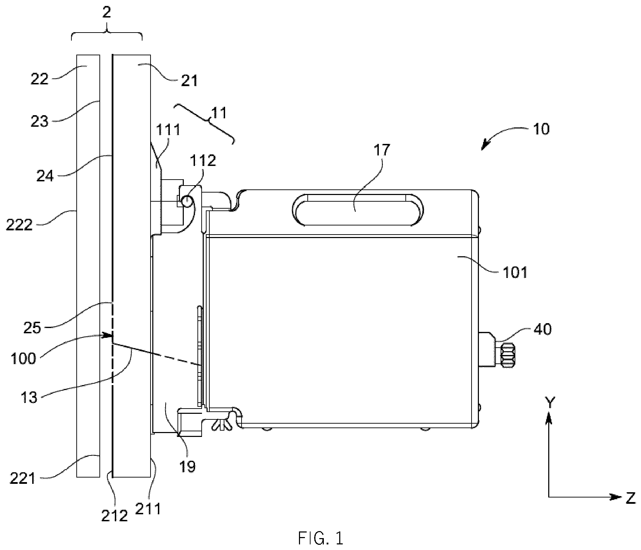

FIG. 1 illustrates a laser apparatus inscribed in a parallelepiped rectangle R defined by a longitudinal axis, X, a vertical axis, Y defining a plane P and a lateral axis, Z, especially a decoating apparatus.

The decoating apparatus 10 is designed to be transportable to treat in situ a surface of a window mounted in situ. The decoating apparatus can comprises an handle 171 to facilitate the handling.

The decoating apparatus 10 comprises a housing 101 to protect inside elements such as the laser device, lens,...

Preferably, the housing is made of metallic-based material or polymeric-based material.

In some embodiments, to facilitate the handling and to facilitate the mounting on the multi-glazed window, the decoating apparatus is inscribed in a compact rectangular parallelepiped allowing to decoat even if the surface of the multi-glazed window is bent.

Preferably, the height measured along the Y axis of the decoating apparatus corresponding to the height of the rectangular parallelepiped equals to or is smaller than 500 mm, preferably equals to or is smaller than 450 mm.

Preferably, the length measured along the Z axis of the decoating apparatus corresponding to the length of the rectangular parallelepiped equals to or is smaller than 400 mm, preferably equals to or is smaller than 350 mm

Preferably, the width measured along the X axis of the decoating apparatus corresponding to the width of the rectangular parallelepiped equals to or is smaller than 250 mm, preferably equals to or is smaller than 200 mm.

The weight is preferably less than substantially 20kg and preferably less than substantially 15kg to be easily handled and transported by a single person.

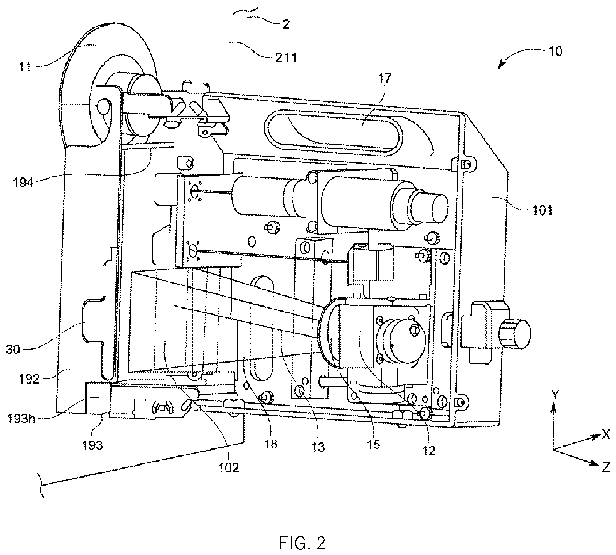

In preferred embodiments as illustrated in FIG. 2, the decoating apparatus has a weight of substantially 13 kg with a height of substantially 420 mm, a width of substantially 150 mm and a length of substantially 300 mm to be easily handled and transported by a single person.

The housing **101** comprises an aperture **102** to let the laser beam going out of the housing meaning that the aperture is positioned in front of the trajectory of the laser beam.

According to a first aspect of the invention, as illustrated by FIG. 1, a decoating apparatus **10** comprising a mounting means **11** to mount the decoating apparatus on a multi-glazed window **2** mounted in situ meaning that the window is mounted on a stationary object, for instance a building, or mounted on a mobile object, for instance a vehicle, a train.

In some embodiments, the decoating apparatus **10** can be removed from at least a part of the mounting means **11.**

The decoating apparatus can be mounted on the frame of the multi-glazed window or on the border of the multi-glazed window instead of mounted on the external surface.

Preferably, the mounting device comprises a suction pad **111** to mount the decoating apparatus on the surface **211** of the multi-glazed window. Preferably, in some embodiments, to facilitate the handling and to be able to manipulate the calibrated element **50,** the mounting means comprises an hooking and unhooking means **112.** In such embodiments, the suction pad can be mounted on the multi-glazed window and in a second step, the decoating apparatus can be hooked on the suction pad **111** with the hooking and unhooking means **112.**

The plane P is preferably substantially parallel to a surface **211, 212, 221, 222** of the multi-glazed window **2**.The decoating apparatus can comprises a stabilization means **121** to stabilize the decoating apparatus on the multi-glazed window while keeping the parallelism between plane P and a surface of the multi-glazed window.

The following description relates to a multi-glazed window but it's understood that the invention may be applicable to single-glazed window meaning a window having a single panel.

The window **2** can be a multi-glazed window used as a window to close an opening of the stationary object or to close an opening of the mobile object.

The multi-glazed window **2** can be at least partially transparent to visible waves for visibility, and natural or artificial light. The multi-glazed window is made of multiple panels separated by at least one interlayer, forming multiple interfaces. The panels therefore can be separated by a space filled with gas and/or by a polymeric interlayer.

In some embodiments, the multi-glazed window **2** can comprise at least two glass panels **21, 22** separated a panel interlayer **23** creating surfaces **211, 212, 221, 222.**

The panel interlayer 23 can be a spacer allowing to create a space **23** filled by a gas like Argon to improve the thermal isolation of the multi-glazed window, creating an insulating multi-glazed window. The invention is not limited to apparatus for use on multi-glazed window having two panels. The apparatus and method of the present invention are suitable for any multi-glazed window such as double, triple glazed windows.

The panel interlayer **23** can be a plastic panel interlayer to laminate the two glass panels together to reduce the noise and/or to ensure the penetration safety. The laminated glazing comprises panels maintained by one or more interlayers positioned between glass panels. The interlayers are typically polyvinyl butyral (PVB) or ethylene-vinyl acetate (EVA) for which the stiffness can be tuned. These interlayers keep the glass panels bonded together even when broken in such a way that they prevent the glass from breaking up into large sharp pieces.

Said panels can be comprises one or more glass sheets. Said glass sheets of can be made of glass, polycarbonate, PVC or any other material used for a window mounted on a stationary object or on a mobile object.

Usually, the material of the panels of multi-glazed window 2 is, for example, soda-lime silica glass, borosilicate glass, aluminosilicate glass or other materials such as thermoplastic polymers or polycarbonates which are especially known for automotive applications. References to glass throughout this application should not be regarded as limiting.

The multi-glazed window 2 can be manufactured by a known manufacturing method such as a float method, a fusion method, a redraw method, a press molding method, or a pulling method. As a manufacturing method of the multi-glazed window, from the viewpoint of productivity and cost, it is preferable to use the float method.

Each panel or glass sheet can be independently processed and/or colored,... and/or have different thickness in order to improve the aesthetic, thermal insulation performances, safety,... The thickness of the multi-glazed window is set according to requirements of applications.

The multi-glazed window 2 can be any known window used in situ. For example, the multi-glazed window 2 can be processed, i.e. annealed, tempered,... to respect the specifications of security and anti-thief requirements. The window can independently be a clear glass or a colored glass, tinted with a specific composition of the glass or by applying an additional coating or a plastic layer for example. The window can have any shape to fit to the opening such as a rectangular shape, in a plan view by using a known cutting method. As a method of cutting the multi-glazed window, for example, a method in which laser light is irradiated on the surface of the multi-glazed window to cut the multi-glazed window, or a method in which a cutter wheel is mechanically cutting can be used. The multi-glazed window can have any shape in order to fit with the application, for example a windshield, a sidelite, a sunroof of an automotive, a lateral glazing of a train, a window of a building,...

The shape of the multi-glazed window in a plan view is usually a rectangle. Depending of the application, the shape is not limited to a rectangle and may be a trapeze, especially for a windshield or a backlite of a vehicle, a triangle, especially for a sidelight of a vehicle, a circle or any other shape able to close an opening made on a stationary object or on a mobile object.

In addition, the multi-glazed window can be assembled within a frame or be mounted in a double skin façade, in a carbody or any other means able to maintain a multi-glazed window. Some plastics elements can be fixed on the multi-glazed window to ensure the tightness to gas and/or liquid, to ensure the fixation of the multi-glazed window or to add external element to the multi-glazed window. In some embodiments, a masking element, such as an enamel layer, can be added on part of the periphery of the multi-glazed window.

Preferably, the decoating apparatus is mounted on the external surface **211** of the window **2.** The decoating apparatus can be mounted on the frame of the multi-glazed window or on the border of the multi-glazed window instead of mounted on the external surface depending on the application and the situation of the window on the stationary or mobile object.

Preferably, when the laser apparatus is a decoating apparatus, at least one coating system 24 is present on one interface, meaning one surface **211, 212, 221, 222** of the multi-glazed window 2.

Preferably, the coating system is on one of the internal surfaces **212, 221** of the multi-glazed window.

In some embodiments, the multi-glazed window can comprises more than one coating systems. Each coating system is present on a different surface of the multi-glazed window.

This coating system 24 generally uses a metal-based layer and infrared light is highly refracted by this type of layer. Such coating system 24 is typically used to achieve a to a low-energy multi-glazed window.

In some embodiment, the coating system 24 can be a heatable coating applied on the multi-glazed window to add a defrosting and/or a demisting function for example and/or to reduce the accumulation of heat in the interior of a building or vehicle or to keep the heat inside during cold periods for example. Although coating system 24 are thin and mainly transparent to eyes.

Usually, the coating system 24 is covering most of the surface of the interface of the multi-glazed window 2.

The coating system 24 can be made of layers of different materials and at least one of these layers is electrically conductive. In some embodiments, for example in automotive windshields, the coating system 24 can be electrically conductive over the majority of one major surface of the multi-glazed window. This can causes issues such as heated point if the portion **25** to be decoating is not well designed.

A suitable coating system **24** is for example, a conductive film. A suitable conductive film, is for example, a laminated film obtained by sequentially laminating a transparent dielectric, a metal film, and a transparent dielectric, ITO, fluorine-added tin oxide (FTO), or the like. A suitable metal film can be , for example, a film containing as a main component at least one selected from the group consisting of Ag, Au, Cu, and Al.

Such coating systems are low in reflectance for RF radiation meaning that RF radiation are mostly transmitted through the material. In contrast, high in reflectance for RF radiation means that RF radiation are mostly reflected on the surface of the material and/or absorbed by the material and the attenuation is at level of 20 decibels (dB) or more. Low in reflectance means an attenuation at level of 10 decibels (dB) or less. The coating system which is high in reflectance for RF radiation means that the coating system is non-transmitting to RF radiation. Typically, the coating system 24 has an emissivity of not more than 0.4, preferably equals to or less than 0.2, in particular equals to or less than 0.1, equals to or less than 0.05 or even equals to or less than 0.04.

The coating system may comprise a metal based low emissive coating system. Such coating systems typically are a system of thin layers comprising one or more, for example two, three or four, functional layers based on an infrared radiation reflecting material and at least two dielectric coatings, wherein each functional layer is surrounded by dielectric coatings. The coating system of the present invention may in particular have an emissivity of at least 0.010. The functional layers are generally layers of silver with a thickness of some nanometers, mostly about 5 to 20nm. The dielectric layers are generally transparent and made from one or more layers of metal oxides and/or nitrides. These different layers are deposited, for example, by means of vacuum deposition techniques such as magnetic field-assisted cathodic sputtering, more commonly referred to as "magnetron sputtering". In addition to the dielectric layers, each functional layer may be protected by barrier layers or improved by deposition on a wetting layer.

Moreover, if the multi-glazed window presents two coating systems applied on two different interfaces **211, 212, 221, 222,** a first coating needs to be decoated before the second one. For example, the decoating apparatus decoats a portion on the closest coating system and then decoats the second one. The focus point is adapted to be on the correct coating system. Preferably, to avoid to modify the decoating of the closest coating, the decoating apparatus decoats a portion on the farthest coating system and then decoats the closest one. The needed power to decoat the farthest one is higher than the needed power to decoat the closest one and risks to degrade the decoated shape of the portion on the closest one if this one is done before the farthest coating.

Dimensions and shape of the portion to be decoated or the decoated portion depend on the desire application., The apparatus or part of the apparatus can therefore be adapted to the dimension of the portion to be decoated.

The decoated portion can be a full decoated area meaning that the coating system is removed in this entire portion.

Alternatively, to minimize the decoating time while keeping functionalities, such as thermal performances, of the coating system, the decoated portion comprises decoated segments creating zones where the coating system is still present. Decoated segments can have a width between 15 µm and 150 µm, preferably between 30 µm and 70 µm, and more preferably substantially 50 µm, forming specific designs, such as lines, polygons, hashtag-like, a grid or a like.

Decoated designs can depend on wanted visual aspect and / or desired wavelength transparency for example.

The position of the decoated portion on the multi-glazed window depends on the application.

The multi-glazed window can be flat or curved according to requirements by known methods such as hot or cold bending.

The decoating apparatus can decoat small portion of the whole surface of the coating system. As the radius of curvature is usually enough high to allow to focus on a point of the portion to be decoat and keeping the focus on the whole portion.

The laser beam can be reflected on surfaces of the multi-glazed window and can occurs damages around the decoating apparatus by going outside of the decoating apparatus especially damaging human eyes.

Because such laser beam can be dangerous for human and objects around the decoating apparatus, instead of and / or in addition to preventing people from approaching or block the space as usually done when a laser is used, the decoating apparatus **10** comprises a skirt **19, 191, 192, 193, 193h, 194** at least partially surrounding the aperture and in that the skirt is opaque to the laser beam to block a majority of reflections of the laser beam due to the power of the laser beam used. The skirt is opaque to such laser beam **13.**

Coming back to FIG. 1, the laser apparatus **10** comprises a skirt **19** at least partially surrounding the aperture and in that the skirt is opaque to the laser beam.

Preferably, the skirt surrounds at least 80 % of the perimeter of the aperture, preferably the skirt surrounds at least 90 % of the perimeter of the aperture and more preferably the skirt surrounds at least 95 % of the perimeter of the aperture.

More preferably, the skirt surrounds substantially 100% of the perimeter the aperture to avoid the majority of the reflections of the laser beam in any direction.

According to the present invention, the skirt is separated from the external surface **211** of the window by a distance Dg to avoid any issue on the external surface such as scratches, breakage,... The external surface is the surface on which the decoating apparatus is mounted. Preferably, the distance Dg is higher than or equal to 0 mm (0 mm ≤ Dg), preferably higher than or equal to 0.1 mm (0.1 mm ≤ Dg) and more preferably higher than or equal to 0.5 mm (0.5 mm ≤ Dg). According to the present invention, the distance Dg is equal to or smaller than 3 mm (Dg ≤ 3 mm), preferably equal to or smaller than 2 mm (Dg ≤ 2 mm) and more preferably equal to or smaller than 1.5 mm (Dg ≤ 1.5 mm).

Preferably, to reduce the price and the assembling, the material of the skirt is the same than the material of the housing.

To avoid in any damage on the external surface, according to the present invention, the skirt comprises on a part of the border 1921 in front of the multi-glazed window 2 a soften element.

The soften element is an element having a hardness equals to or lower than 100 durometer, preferably equals to or lower than 70 durometer and more preferably equals to or lower than 50 durometer.

In some embodiments, the soften element has preferably a shore A value equals to or smaller than 70 and more preferably equals to or smaller than 50. The soften element preferably equals to or is smaller than substantially 80 shore.

Preferably, the soften element is polymer. In a preferred embodiment, the soften element is a thermoplastic elastomer based material such as styrenic based and vulcanized thermoplastics elastomer. The soften element can a soft polyvinyl chloride.

Preferably, the soften element is placed on the whole border **1921** in front of the multi-glazed window **2** to avoid any damage of the window along the border.

In some embodiments, the skirt can comprises several panels to circle the aperture. The skirt can comprise at least two longitudinal panels **191, 192.** The skirt can comprise at least two lateral panels **193, 194.** In some embodiments, to fit the shape of the housing around the aperture, the skirt can comprises other panels such as panel **193h** to ensure to close the whole perimeter of the aperture.

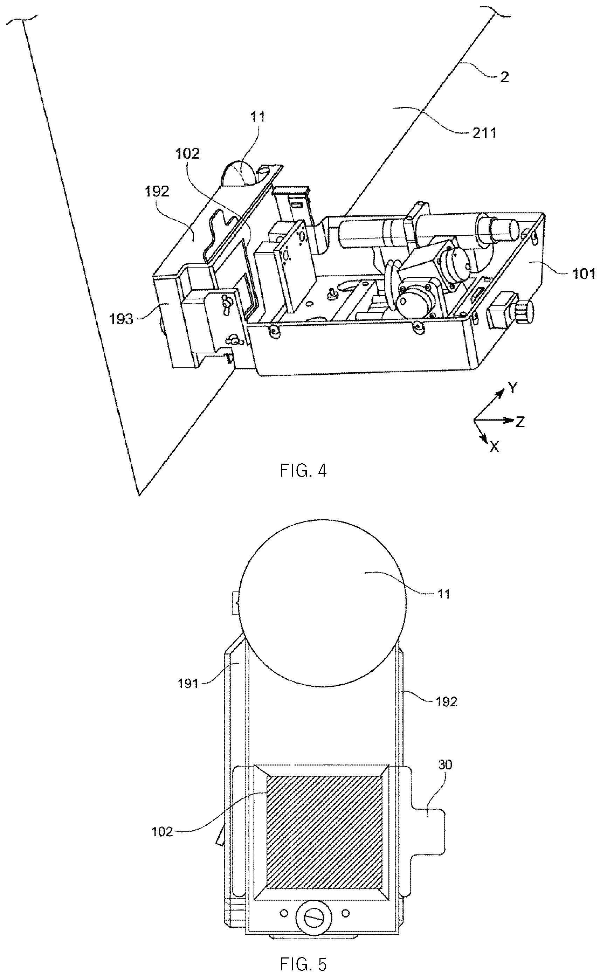

In some embodiments, as illustrated in FIG. 2 and FIG. 4, the skirt **19** comprises at least two longitudinal panels **191, 192** to avoid reflections on the top and on the bottom of the apparatus. These panels are placed on the top and on the bottom around the apparatus.

In some embodiments, the skirt can comprises at least two lateral panels **193, 194** to avoid reflections laterally around of the apparatus. In some embodiments, as illustrated in FIG. 2, the lateral panels can be fixed, i.e. hanged or screwed, or by any other known manner, to the mounting means.

Preferably, the skirt can have any design to fulfill with the housing. In some embodiments, the skirt or panels of the skirt can be flat panels.

In some embodiments, as illustrated in FIG. 4, at least one panel **193** can have a specific shape **193h** to fulfil the design of the housing.

In some embodiments, parts of the skirt and the corresponding parts of the housing are made in a single piece.

In some embodiments, the skirt is fixed on the housing with fixing means. Preferably, the fixing means is fixing and unfixing means to have the possibility to unmount the skirt from the decoating apparatus. And more preferably, the fixing means comprises screws, hanging means or bolts and nuts or any other fixing means able to fix an element on a housing.

In some embodiments, the material of the skirt comprises a metal-based material.

In preferred embodiments, the material of the skirt is the same than the material of the housing.

In some embodiments, where the skirt is flexible at least on the part in contact with the multi-glazed window, the width is larger than the distance **Dd** between the aperture and the external surface **211** to fit with the external surface.

In some embodiments, the skirt is separated from the external surface by a distance Dg meaning that the width of the skirt **Ds** is smaller than the distance **Dd** to avoid to misaligned the parallelism between the decoating apparatus and the external surface. The difference between Ds and Dd is Dg (Ds + Dg = Dd).

In some preferred embodiments, the distance Dg is higher than or equal to 0 mm (0 mm ≤ Dg), preferably higher than or equal to 0.1 mm (0.1 mm ≤ Dg) and more preferably higher than or equal to 0.5 mm (0.5 mm ≤ Dg).

In some preferred embodiments, the distance Dg is equal to or smaller than 3 mm (Dg ≤ 3 mm), preferably equal to or smaller than 2 mm (Dg ≤ 2 mm) and more preferably equal to or smaller than 1.5 mm (Dg ≤ 1.5 mm).

In some embodiments, the decoating apparatus can comprises a contact means **111.** Preferably, the length of contact means can be adapted to ensure the parallelism between the decoating apparatus and the external surface.

Preferably, the thickness of the skirt is comprised between substantially 0.5 mm and 5 mm, more preferably comprised between substantially 2 mm and 4 mm and even more preferably around substantially 3 mm.

The laser apparatus comprises a laser device **200** to treat a surface **211, 212, 221, 222** of the window **2.**

In preferred embodiments, as illustrated in FIG. 2, the laser apparatus is a decoating apparatus to decoat at least partially a portion (25) of a coating system (24) present on a surface of the window (2) and the laser device is designed to decoat at least partially a portion (25) of a coating system (24) present on a surface of the window (2). It means also that a coating system is present on a surface of the window.

The laser device comprises a laser generator 201 to generate a laser beam **13, 202, 202a, 202b, 202c.** It is understood that the laser apparatus can be used in some embodiments to treat, i.e. to engrave, at least a surface of the multi-glazed window.

To very fast remove a portion of a coating system, for instance to improve the electromagnetic transmission of a multi-glazed window, the decoating apparatus comprises an orientation means configured to control the direction of said laser beam. In this way, to decoat a portion is not necessary to use motors to displace the decoating apparatus on the plane P paralleled to the external surface **211** of the multi-glazed-window **2,** the laser beam scans the portion to be decoated thanks to this orientation means. It is not necessarily to displace the decoating apparatus along the plane P for decoating the portion. As the decoating apparatus is fastened to the apparatus, no motor are needed to displace the decoating apparatus along plane P. This conducts to a reduction of the weight of the apparatus. Moreover, as only the laser beam is oriented, the scan of the laser beam on the portion is faster than a displacement on the same portion of the decoating apparatus using motors. Thus, the orientation means is able to rapidly decoat a limited coated portion of a coating system. Thus, the apparatus of the invention can be used to improve the electromagnetic properties of a multi-glazed window already mounted on a stationary object, for instance building, or on a mobile object, for instance a vehicle, a train. Such orientation means allows to decoat a portion of a coating system without moving the decoating apparatus **10** or at least moving the laser device **12** in parallel of the external surface **211** of a multi-glazed window **2** using motors as apparatus of the prior art meaning that the decoating apparatus is lighter and more easily transportable.

The laser apparatus **10** further comprises an orientation means **12** able to orientate the laser beam defining a maximum decoatable surface (WSm) on the surface to be treated.

Preferably, the orientation means comprises at least a rotatable mirror or a mirrors using a galvanometer based motor, a galvo head. More preferably, the orientation means comprises a galvo head **12** configured to control the direction, through the focal lens, of said laser beam. The orientation means head comprises more than one mirror to able the laser beam to fast scan the surface to be decoated.

Said mirrors can rotate to orientate the laser beam. Rotation of said mirrors can be done by actuators, mechanical elements or any other elements able to orientate mirrors.

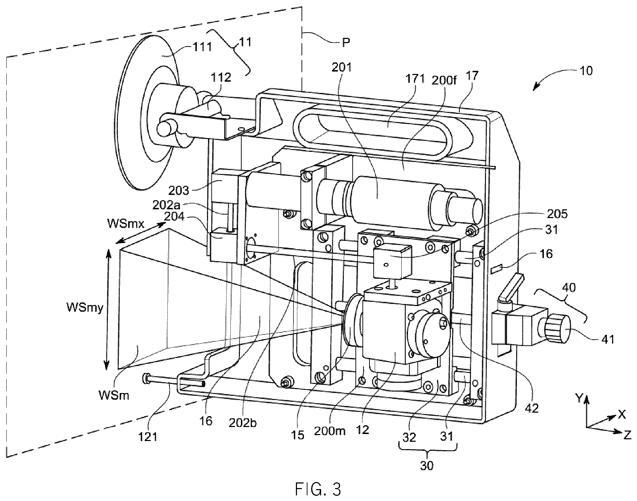

As illustrated in FIG. 3, the orientation of the laser beam **13** is represented a pyramidal 3D shape **16.**

Dimensions of such decoating area **25** is preferably from 5 cm to 25 cm and more preferably from 10 cm to 15 cm.

On the coating system **24,** the pyramidal 3D shape corresponds to a decoating area **25,** as illustrated in FIG. 3. Dimensions **WSmx, WSmy** of such decoating area **25** is preferably from 5 cm to 25 cm and more preferably from 10 cm to 15 cm.

In order to reduce the size of the decoating area **25,** the decoating apparatus can comprises a closing means **14.** Such closing means blocks parts of the scan of the laser beam. The decoating area **25** on the coating system **24** is reduced from a maximum area WSm to a reduced area.

Because laser beam can be dangerous for human, instead of preventing people from approaching or block the space, the decoating apparatus **10** can comprises a opaque to such laser beam **13** skirt between the external surface and the decoating apparatus at least around the mouth in which the laser beam comes out.

In some preferred embodiments, as illustrated in FIG. 3, the laser device comprises a fixed part **200f** and a movable part **200m** to reduce the number of element to move to focus the laser beam on the surface to treat. In such embodiment, the movable part comprises the orientation means **12** and the focal lens **15.**

In some embodiments, the movable part **200m** of the decoating apparatus **10** comprises a first deflecting mirror **205** to deflect the laser beam **202** substantially in the perpendicular direction **202c** to the galvo head. The laser beam **202** is generated by the laser generator **201.** The laser beam is deflected by the first deflecting mirror **205** to enter into the galvo head substantially perpendicular to the Z axis. The galvo head orientates the laser beam **202c** to scan the portion **25** to be at least partially decoated with the oriented laser beam **13.**

The laser device comprises a movable part **200m.** The movable part is able to be displaced inside the decoating apparatus. The movable part comprises a focal lens 15 to produce a focal point **100** of the laser beam **13** at a defined distance **Df** from the focal lens.

To be able to displace the movable part, the decoating apparatus further comprises a movable means **30** able to move the movable part substantially along the lateral axis Z meaning that the movable part can be displaced to move away or closer to the multi-glazed window along parallel to the Z axis to place the focal point at a specific distance and preferably on the portion **25** of a coating system **24.**

Preferably, the movable part is irremovable along the longitudinal axis X and along the vertical axis Y to be able to move only substantially along parallel to the Z axis.

In some preferred embodiment, the laser device comprises a fixed part **200f,** irremovable in the decoating apparatus in directions paralleled to plane P and along the lateral axis Z meaning that the fixed part cannot move inside the decoating apparatus.

Preferably, the fixed part of the laser device comprises a laser generator **201** to generate a laser beam **202** to minimize movable components of the laser device while reducing the weight of the laser device.

Preferably, the fixed part of the laser device can be screwed or firmly fixed by any other known manner on the housing.

Preferably, the laser generator generates a collimated laser beam to minimize the size and the components of the laser device.

In a preferred embodiment, to minimize dimensions of the decoating apparatus to be more compact, as illustrated in FIG.3, the fixed part **200f** of the laser device further comprises a second **204** and a third **203** deflecting mirrors to deflect the laser beam substantially in the perpendicular direction.

In such embodiment, the laser generator **201** generates a laser beam **202** substantially parallel to the Z axis. The laser beam **202** is deflected by the third **203** and the second **204** deflecting mirrors to be redirected in a substantially paralleled and opposite direction **202b** from the generated direction. The redirected laser beam **202b** enters into the movable part **200m** of the laser device **200.** Then the first deflecting mirror **205** deflects the laser beam **202b** to enter into the galvo head **12.**

In some embodiments, the second and the third deflecting mirrors are comprised in the fixed part. The movable means by moving away or closer to the multi-glazed window along parallel to the Z axis the movable part of the laser device, the length of the redirected laser beam **202b** is respectively increased or reduced. Lengths of the part of the laser beam **202, 202a, 202c** keep their respective length even if the movable part is moving.

In other embodiments, the second and the third deflecting mirrors are comprised in the movable part. In such embodiments, only the length of the generated laser beam **202** can be increased or reduced by moving the movable part.

The movable part **200m** can move with the movable means **30, 40, 41, 42.**

In some embodiments, easily and precisely move the movable part without opening the decoating apparatus **10** and / or without touching directly the laser device **12,** the movable means comprises an internal part **30** and an external part **40.**

Preferably, the internal part **30** comprises a plate **32** or like on which the movable part is placed and a slide **31** to ensure the direction of the movement of the movable part while keeping the correct trajectory of the laser beam **13.** As shown in FIG. 2, the slide can be in form of bars **31** on which the plate **32** can slide. Thus, the movable part can move only along bars and substantially along the Z axis.

Preferably, in relation with the internal part and the external part, the movable means can comprises a movable element **42.**

In some embodiments, easily and precisely move the movable part **200m** without opening the decoating apparatus **10** and/or without touching directly the laser device **12,** the movable means **40** comprises a movable element **42** and a crank **41** linked to the movable element. The crank is preferably placed outside of the interior of the decoating apparatus **10** to fast interact with the position of the laser device.

In some embodiments, the movable element comprises a screw **42** between the crank **41** and the slide **30** to precisely move the movable part of the laser device.

Preferably, the external part **40** can comprises a crank **41** linked to the movable element. The crank is placed outside of the interior of the decoating apparatus **10** to fast interact with the position of the laser device without opening the housing and / or manipulating directly the movable part of the laser device.

In some embodiments, the movable means can comprises a motor to move the movable part. In such embodiments, the motor is placed inside the decoating apparatus and a interaction means is placed outside the decoating apparatus to activate the motor such as press buttons,...

Preferably, the screw **42** has a defined thread. By turning the screw, the mobile part moves of a defined distance corresponding to the length of the defined thread. In some embodiments, a measurement display can converts the number of rotation made by the screw to display the distance in mm. Once the difference between the distance Df and the distance between the coating system and the focal lens is calculated or at least estimated, This difference correspond to the displacement to be made, from or away of the multi-glazed window depending of the configuration, by the mobile part. The value shown by a measurement display indicates a reference value. The measurement display can show the displacement to arrive to said difference.

The decoating apparatus can comprise a measurement display **16** able to display the movement of the laser device or the movable part of the laser device in some embodiments induced by the movable means.

The measurement display can be linked to the direct movement of the laser device or linked to a part of the movable means such as the rotation of the crank, the rotation of the screw or the movement on the slide if such elements exist.

Preferably, the measurement display displays movement in millimeters to be able to know the exact position of the focal point.

The precision of the move is preferably under the 0.1 mm. The movement is preferably indicated in 0.1 mm. From the position Pc indicated, or reset, on the measurement display, the distance Dc is converter in 1/10 mm to move in the correct unit, i.e. Dc equals to 30 mm the measurement display needs to indicate a movement of 300.

In some embodiments, the measurement display can be analogic or digital.

In some embodiments, a reset function can be added to reset the value of the movement of the laser device, for example the index value.

As illustrated in FIG. 2, the decoating apparatus **10** can comprise a closing means **30** to at least partially reduce the maximum decoatable surface **WSm** to a working surface **WS1** on the coating system **24.**

The volume **18** generated by the orientation means and the laser beam is the same, only the closing means is different to change the working decoatable area **25.**

An embodiment provides a method of treating a surface of a window mounted in situ with a laser apparatus according to the first aspect mounted on the window mounted in situ. The method comprises a step of treating a working area of a surface with the laser beam.

During this step, a majority, preferably more than 70 %, more preferably more than 90% and even more preferably more than 95 %, of reflections of the laser beam are blocked by the skirt by absorption and / or reflections.

Preferably the laser device is a decoating apparatus and the treating step is a step of at least partially decoating a coating system of a multi-glazed window mounted in situ with a decoating apparatus according to the first aspect of the present invention mounted on the multi-glazed window mounted in situ meaning that the multi-glazed window is mounted on a stationary object, such as a building, or on a mobile object, such as a vehicle, a train,... The method comprises a step of decoating a working area of the coating system with the laser beam.

Preferably, the method comprises a step of mounting the laser device on the external surface **211** of the window.

In some preferred embodiments, the focal point **100** can be displaced to be on the surface to treat by moving the laser device or the movable part, in some embodiments, of the laser device.

In some embodiment to calibrate, to adjust and / or to find the focal point of the laser beam on the external surface, a calibrated element can be used.

A third aspect of the present invention provides the use of a skirt, see claim 11, e.g. the use of a skirt around an aperture of a laser apparatus comprising a mounting means to mount the laser apparatus on a window mounted in situ to block a majority of reflections of the laser beam; the laser apparatus comprises a laser device generating a laser beam to treat a surface of the window and an orientation means able to orientate the laser beam defining a maximum decoatable surface (WSm) on the surface to be treated.

## Claims

1. Laser apparatus (10) for decoating at least partially a portion (25) of a coating system (24) present on an external surface (211) of a window (2), the laser apparatus (10) being inscribed in a parallelepiped rectangle R defined by
a longitudinal axis, X, a vertical axis, Y defining a plane P and a lateral axis, Z comprising
- a mounting means (11) to mount the laser apparatus on a window (2), preferably a multi-glazed window, mounted in situ;
- a laser device (200) generating a laser beam (13) to treat a surface (211, 212, 221, 222) of the window;
- an orientation means (12) able to orientate the laser beam defining a maximum decoatable surface (WSm) on the surface to be treated;
- a housing (101) comprising an aperture (102) to let the laser beam going out of the housing
**characterized in that** the laser apparatus comprises a skirt (19, 191, 192, 193, 193h, 194) at least partially surrounding the aperture and **in that** the skirt is opaque to the laser beam
**wherein** the skirt in use is separated from the external surface (211) thanks to the presence of the mounting means (11) by a distance Dg; **wherein** the distance Dg is equal to or smaller than 3 mm,
preferably equal to or smaller than 2 mm, and more preferably equal to or smaller than 1.5 mm;
**and wherein** the skirt comprises on a part of the border (1921) in front of the multi-glazed window (2) a soften element, wherein the soften element is an element having a hardness equal to or lower than 100 durometer, so as to avoid any damage on the external surface.

2. Laser device according to any preceding claims wherein the skirt surrounds at least 80 % of the perimeter of the aperture, preferably the skirt surrounds at least 90 % of the perimeter of the aperture and more preferably the skirt surrounds at least 95 % of the perimeter of the aperture.

3. Laser apparatus according to claim 2 wherein the skirt surrounds substantially 100% of the perimeter the aperture.

4. Laser apparatus according to claim 5 wherein the distance Dg is higher than or equal to 0 mm, preferably higher than or equal to 0.1 mm, and more preferably higher than or equal to 0.5 mm.

5. Laser apparatus according to claim 1 wherein the soften element is placed on the whole border (1921) in front of the multi-glazed window (2).

6. Laser apparatus according to any preceding claims wherein the skirt comprises at least two longitudinal panels (191, 192).

7. Laser apparatus according to any preceding claims wherein the skirt comprises at least two lateral panels (193, 194).

8. Laser apparatus according to any preceding claims wherein the skirt is fixed on the housing with fixing means.

9. Laser apparatus according to any preceding claims wherein the material of the skirt comprises a metal-based material.

10. Method of treating a surface of a window mounted in situ with a laser apparatus according to claims 1 to 9 mounted on the window mounted in situ; the method comprises a step of treating a working area of a surface with the laser beam
**characterized in that** the skirt is separated from the external surface (211) by a distance Dg, wherein the distance Dg is equal to or smaller than 3 mm, so that a a majority of reflections of the laser beam are blocked by the skirt, and so as to avoid any damage on the external surface.

11. Use of a skirt comprising on a part of the border (1921) in front of the multi-glazed window (2) a soften element, wherein the soften element is an element having a hardness equal to or lower than 100 durometer, so as to avoid any damage on the external surface,
around an aperture of a laser apparatus comprising a mounting means to mount the laser apparatus on a window mounted in situ to block a majority of reflections of the laser beam; the laser apparatus comprises a laser device generating a laser beam to treat a surface of the window and an orientation means able to orientate the laser beam defining a maximum decoatable surface (WSm) on the surface to be treated.

## Patentansprüche

1. Laser-Einrichtung (10) zum zumindest teilweisen Entschichten eines Anteils (25) eines Beschichtungssystems (24), das auf einer Außenoberfläche (211) eines Fensters (2) vorhanden ist, wobei die Laser-Einrichtung (10) in ein Parallelepiped-Rechteck R eingeschrieben ist, das durch eine Längsachse, X, eine vertikale Achse, Y, die eine Ebene P definiert, und eine laterale Achse, Z, definiert ist, umfassend
- ein Montagemittel (11) zum Montieren der Laser-Einrichtung auf einem Fenster (2), vorzugsweise einem mehrfachverglasten Fenster, das in situ montiert ist;
- eine Laser-Vorrichtung (200), die einen Laserstrahl (13) generiert, um eine Oberfläche (211, 212, 221, 222) des Fensters zu behandeln;
- ein Orientierungsmittel (12), das in der Lage ist, den Laserstrahl zu orientieren, der eine maximal entschichtbare Oberfläche (WSm) auf der zu behandelnden Oberfläche definiert;
- ein Gehäuse (101), das eine Apertur (102) umfasst, um den Laserstrahl aus dem Gehäuse austreten zu lassen, **dadurch gekennzeichnet, dass** die Laser-Einrichtung eine Schürze (19, 191, 192, 193, 193h, 194) umfasst, die die Apertur zumindest teilweise umgibt, und dass die Schürze für den Laserstrahl opak ist,
wobei die Schürze im Gebrauch aufgrund der Anwesenheit des Montagemittels (11) um einen Abstand Dg von der Außenoberfläche (211) getrennt ist;
wobei der Abstand Dg gleich oder kleiner als 3 mm, vorzugsweise gleich oder kleiner als 2 mm und bevorzugter gleich oder kleiner als 1,5 mm ist;
und wobei die Schürze an einem Teil des Randes (1921) vor dem mehrverglasten Fenster (2) ein weicheres Element umfasst, wobei das weichere Element ein Element mit einer Härte gleich oder kleiner als 100 Durometer ist, um jegliche Beschädigung an der Außenoberfläche zu vermeiden.

2. Laser-Vorrichtung nach einem der vorhergehenden Ansprüche, wobei die Schürze mindestens 80 % des Umfangs der Apertur umgibt, wobei die Schürze vorzugsweise mindestens 90 % des Umfangs der Apertur umgibt und die Schürze bevorzugter mindestens 95 % des Umfangs der Öffnung umgibt.

3. Laser-Einrichtung nach Anspruch 2, wobei die Schürze im Wesentlichen 100 % des Umfangs der Apertur umgibt.

4. Laser-Einrichtung nach Anspruch 5, wobei der Abstand Dg größer als oder gleich 0 mm, vorzugsweise größer als oder gleich 0,1 mm und bevorzugter größer als oder gleich 0,5 mm ist.

5. Laser-Einrichtung nach Anspruch 1, wobei das weichere Element auf dem gesamten Rand (1921) vor dem mehrfachverglasten Fenster (2) platziert ist.

6. Laser-Einrichtung nach einem der vorhergehenden Ansprüche, wobei die Schürze mindestens zwei Längsplatten (191, 192) umfasst.

7. Laser-Einrichtung nach einem der vorhergehenden Ansprüche, wobei die Schürze mindestens zwei seitliche Platten (193, 194) umfasst.

8. Laser-Einrichtung nach einem der vorhergehenden Ansprüche, wobei die Schürze mit Fixiermitteln an dem Gehäuse fixiert ist.

9. Laser-Einrichtung nach einem der vorhergehenden Ansprüche, wobei das Material der Schürze ein Material auf Metallbasis umfasst.

10. Verfahren zum Behandeln einer Oberfläche eines in situ montierten Fensters mit einer Laser-Einrichtung nach den Ansprüchen 1 bis 9, die auf dem in situ montierten Fenster montiert wird; wobei das Verfahren einen Schritt des Behandelns eines Arbeitsbereichs einer Oberfläche mit dem Laserstrahl umfasst,
**dadurch gekennzeichnet, dass** die Schürze von der Außenoberfläche (211) durch einen Abstand Dg getrennt ist, wobei der Abstand Dg gleich oder kleiner als 3 mm ist, so dass ein Großteil der Reflexionen des Laserstrahls durch die Schürze blockiert wird, und um jegliche Beschädigung an der Außenoberfläche zu vermeiden.

11. Verwendung einer Schürze, die an einem Teil des Randes (1921) vor dem mehrfachverglasten Fenster (2) ein weicheres Element umfasst, wobei das weichere Element ein Element mit einer Härte gleich oder kleiner als 100 Durometer ist, um jegliche Beschädigung an der Außenoberfläche zu vermeiden, um eine Apertur einer Laser-Einrichtung, die ein Montagemittel umfasst, um die Laser-Einrichtung auf einem in situ montierten Fenster zu montieren, um einen Großteil der Reflexionen des Laserstrahls zu blockieren; wobei die Laser-Einrichtung eine Laser-Vorrichtung, die einen Laserstrahl generiert, um eine Oberfläche des Fensters zu behandeln, und ein Orientierungsmittel umfasst, das in der Lage ist, den Laserstrahl zu orientieren, der eine maximale entschichtbare Oberfläche (WSm) auf der zu behandelnden Oberfläche definiert.

## Revendications

1. Appareil laser (10) pour décaper au moins partiellement une portion (25) d'un système de revêtement (24) présent sur une surface externe (211) d'une fenêtre (2), l'appareil laser (10) étant inscrit dans un rectangle parallélépipédique R défini par un axe longitudinal, X, un axe vertical, Y définissant un plan P et un axe latéral, Z comprenant
- un moyen de montage (11) pour monter l'appareil laser sur une fenêtre (2), préférablement une fenêtre à vitrages multiples, montée in situ ;
- un dispositif laser (200) générant un faisceau laser (13) pour traiter une surface (211, 212, 221, 222) de la vitre ;
- un moyen d'orientation (12) apte à orienter le faisceau laser définissant une surface maximale pouvant être décapée (WSm) sur la surface à traiter ;
- un logement (101) comprenant une ouverture (102) pour laisser sortir le faisceau laser du logement
**caractérisé en ce que** l'appareil laser comprend une jupe (19, 191, 192, 193, 193h, 194) entourant au moins partiellement l'ouverture et **en ce que** la jupe est opaque au faisceau laser
dans lequel la jupe en utilisation est séparée de la surface externe (211) grâce à la présence du moyen de montage (11) d'une distance Dg ;
dans lequel la distance Dg est égale ou inférieure à 3 mm, préférablement égale ou inférieure à 2 mm, et plus préférablement égale ou inférieure à 1,5 mm ;
et dans lequel la jupe comprend sur une partie de la bordure (1921) devant la fenêtre à vitrages multiples (2) un élément ramolli, l'élément ramolli étant un élément ayant une dureté égale ou inférieure à 100 duromètre, de manière à éviter tout dommage sur la surface externe.

2. Dispositif laser selon l'une quelconque des revendications précédentes dans lequel la jupe entoure au moins 80 % du périmètre de l'ouverture, préférablement la jupe entoure au moins 90 % du périmètre de l'ouverture et plus préférablement la jupe entoure au moins 95 % du périmètre de l'ouverture.

3. Appareil laser selon la revendication 2 dans lequel la jupe entoure substantiellement 100 % du périmètre de l'ouverture.

4. Appareil laser selon la revendication 5 dans lequel la distance Dg est supérieure ou égale à 0 mm, préférablement supérieure ou égale à 0,1 mm, et plus préférablement supérieure ou égale à 0,5 mm.

5. Appareil laser selon la revendication 1 dans lequel l'élément ramolli est placé sur la bordure (1921) tout entière devant la fenêtre à vitrages multiples (2).

6. Appareil laser selon l'une quelconque des revendications précédentes dans lequel la jupe comprend au moins deux panneaux longitudinaux (191, 192).

7. Appareil laser selon l'une quelconque des revendications précédentes dans lequel la jupe comprend au moins deux panneaux latéraux (193, 194).

8. Appareil laser selon l'une quelconque des revendications précédentes dans lequel la jupe est fixée sur le logement avec un moyen de fixation.

9. Appareil laser selon l'une quelconque des revendications précédentes dans lequel le matériau de la jupe comprend un matériau à base de métal.

10. Procédé de traitement d'une surface d'une fenêtre montée in situ avec un appareil laser selon les revendications 1 à 9 monté sur la fenêtre montée in situ ; le procédé comprend une étape de traitement d'une zone de travail d'une surface avec le faisceau laser **caractérisé en ce que** la jupe est séparée de la surface externe (211) d'une distance Dg, la distance Dg étant égale ou inférieure à 3 mm, de sorte qu'une majorité de réflexions du faisceau laser soient bloquées par la jupe, et de manière à éviter tout dommage sur la surface externe.

11. Utilisation d'une jupe comprenant sur une partie de la bordure (1921) devant la vitre (2) un élément ramolli, l'élément ramolli étant un élément ayant une dureté égale ou inférieure à 100 duromètre, de manière à éviter tout dommage sur la surface externe, autour d'une ouverture d'un appareil laser comprenant un moyen de montage pour monter l'appareil laser sur une fenêtre montée in situ pour bloquer une majorité de réflexions du faisceau laser ; l'appareil laser comprend un dispositif laser générant un faisceau laser pour traiter une surface de la fenêtre et un moyen d'orientation apte à orienter le faisceau laser définissant une surface pouvant être décapée maximale (WSm) sur la surface à traiter.
